# EUROPÄISCHE PATENTSCHRIFT

(11) **EP 3 551 872 B1**
(45) Veröffentlichungstag und Bekanntmachung des Hinweises auf die Patenterteilung: **01.04.2020**
(21) Anmeldenummer: 17832032.1
(22) Anmeldetag: 06.12.2017
(51) Int. Cl.: F02M 25/035, F02M 17/22, F02M 31/04, F02M 31/087, F02M 26/17

(54) **BRENNKRAFTMASCHINE**
INTERNAL COMBUSTION ENGINE
MOTEUR À COMBUSTION INTERNE

(30) Priorität: 12.12.2016 AT 511252016
(43) Veröffentlichungstag der Anmeldung: 16.10.2019
(73) Patentinhaber: Lorenz, Michael, 1190 Wien (AT); Lorenz, Georg, 1190 Wien (AT)
(72) Erfinder: Lorenz, Michael, 1190 Wien (AT); Lorenz, Georg, 1190 Wien (AT)
(74) Vertreter: Babeluk, Michael
(86) Internationale Anmeldenummer: PCT/AT2017/060324
(87) Internationale Veröffentlichungsnummer: WO 2018/107192

(56) Entgegenhaltungen:
- DE-A1- 10 124 896
- FR-A1- 2 947 011
- GB-A- 1 526 430
- US-A- 5 794 601

## Beschreibung

Die Erfindung betrifft ein eine Brennkraftmaschine, welche mit einem flüssigen oder gasförmigen Kraftstoff betreibbar ist, mit zumindest einem Einlasstrakt, zumindest einem Auslasstrakt und einer den Auslasstrakt und den Einlasstrakt verbindenden Abgasrückführleitung zur Rückführung zumindest eines Teils des bei der Verbrennung des Kraftstoffes entstehenden Abgases in den Einlasstrakt, mit einer im Einlasstrakt angeordneten Mischkammer zur Bildung einer Dispersion aus rückgeführtem Abgas und einem Wasser und Kraftstoff enthaltenden flüssigen Dispersionsmedium, wobei die vom Auslasstrakt abzweigende Abgasrückführleitung in die Mischkammer einmündet, und wobei stromabwärts der Mischkammer das Einlasstrakt über einen Wärmetauscher mit dem Auslasstrakt thermisch verbunden ist, welcher Wärmetauscher vorzugsweise als Gegenstromwärmetauscher ausgebildet ist, wobei das gasförmige Dispersionsmedium im Wärmetauscher thermische Energie aus dem Abgas aufnimmt
Es ist bekannt, eine Brennkraftmaschine mit einem Wasser/Kraftstoffgemisch zu betreiben, um den Kraftstoffverbrauch zu reduzieren und die Emissionen zu reduzieren.

Die FR 2 926 606 A1 offenbart eine Brennkraftmaschine, bei der - noch nicht verdampfter - alternativer Kraftstoff in einer Mischkammer mit Abgas und Kondensat vermischt und durch die Abgaswärme in einem im Auslasstrakt angeordneten Wärmetauscher erwärmt wird, wobei der alternative verdampfte Kraftstoff über eine Versorgungsleitung dem Einlasstrakt der Brennkraftmaschine zugeführt wird. Dabei sind eine Vielzahl an Ventilen vorgesehen, um den Kraftstoff, den alternativen verdampften Kraftstoff, das Abgas und das Wasser zu dosieren. Ein flüssiges Dispersionsmedium, welches durch ein Gemisch aus Wasser und Kraftstoff gebildet ist, ist nicht vorgesehen.

Die DE 10 2013 212 596 A1 beschreibt eine Vorrichtung zur Reduzierung der Schadstoffemissionen und/oder des Kraftstoffverbrauchs einer Brennkraftmaschine eines Fahrzeugs, mit einer Einrichtung zur Abgasrückführung, über welche Abgas aus einem Auslasstrakt in einen Ansaugtrakt der Brennkraftmaschine zuführbar ist. Die Vorrichtung umfasst einen Kondensatabscheider zur Wassergewinnung, der mit der Einrichtung zur Abgasrückführung verbunden ist, einen Speicherbehälter zur Bevorratung des gewonnenen Wassers, der an den Kondensatabscheider angeschlossen ist und eine Einrichtung zur Wasser- und Emulsionseinspritzung, die über den Speicherbehälter mit Wasser versorgbar ist.

Aus der DE 44 12 966 A1 ist ein Verfahren und eine Vorrichtung zum Betreiben eines Dieselmotors bekannt, dem eine Wasser-in-Dieselöl-Emulsion mit in Abhängigkeit von der Motordrehzahl und dem Lastzustand des Motors veränderlichem Wasseranteil zugeführt wird. Dabei wird in das Luftansaugrohr des Dieselmotors Abgas desselben zugeführt und der zurückgeführte Abgasanteil gesteuert wahlweise proportional zu dem Wasseranteil und/oder zu dem Sauerstoffanteil im Abgas verändert. Der Dieselmotor weist eine Einspritzpumpe auf, der in einem Rezirkulationskreislauf eine zum Vermischen von Wasser mit Dieselöl zu einer Wasser-in-Dieselöl-Emulsion dienenden Mischvorrichtung vorgeschaltet ist, in die eine Dieselölzuleitung und über eine steuerbare Wassereinspritzdüse eine Wasserzuleitung münden. Die Wassereinspritzdüse wird von einer elektronischen Regeleinheit für eine Änderung des Wasseranteils in der Emulsion in Abhängigkeit von dem Lastzustand und/oder der Drehzahl des Dieselmotors gesteuert.

Weiters ist aus der DE 39 12 344 A1 eine Einrichtung zum Herstellen einer Öl-Wasser-Emulsion für den Betrieb einer Einspritzpumpe eines Dieselmotors bekannt, welche eine rotationssymmetrische Wirbelkammer mit tangentialem Einlauf und sich verjüngendem axialen Auslauf aufweist. Zur Herstellung einer feinen homogenen Emulsion mit einer Größe der suspendierenden Wassertröpfchen im Bereich von 2 µm bis 4 µm ist der dem Auslauf abgewandte axiale Endabschnitt der Wirbelkammer von einem koaxial zur Wirbelkammer verlaufenden Ringkanal umgeben, der über tangential zur Wirbelkammer ausgerichtete Einlaufschlitze mit dieser verbunden ist und in welchen ein Öleinlasskanal tangential einmündet. In den einlaufseitigen Endabschnitt der Wirbelkammer mündet eine elektromagnetisch gesteuerte Einspritzdüse. Der Auslauf der Wirbelkammer mündet über eine Erweiterung in eine Saugkammer eines Radiallaufrades, das in einer Pumpenkammer angeordnet ist, die im Bereich des Umfanges des Radiallaufrades einen Austrittskanal aufweist, an den eine zur Einspritzpumpe führende Vorlaufleitung und eine zu einem Emulsionseinlasskanal führende Rezirkulationsleitung angeschlossen sind. Der Emulsionskanal mündet ebenfalls in den Ringkanal tangential ein. In die Saugkammer des Radiallaufrades mündet ein Eintrittskanal seitlich ein, an den ein von der Einspritzpumpe kommende Rücklaufleitung angeschlossen ist.

Durch die Verwendung beispielsweise einer Wasser-in-Dieselöl-Emulsion können mit zunehmendem Wasseranteil in der Emulsion die Stickoxid- und Rußanteile im Abgas zunehmend vermindert werden.

Die DE 101 24 896 A1 beschreibt ein Verfahren zur Echtzeiterzeugung von Kraftstoffgasen für Verbrennungsmotoren und zur Verringerung von Schadstoffen, wobei ein Teil der Abgasluft über einen speziellen Wandler in einen Tank geleitet wird. Das dort entstandene Gas/Luftgemisch gelangt durch den Wandler zum Verbrennungsmotor und steht als Kraftstoffgas zur Verfügung. Der aus zwei Stahl- oder Eisenrohren bestehende Wandler arbeitet nach dem Gegenstromprinzip mit thermischer Reaktion unter dem Einfluss von Druck und einem selbsterzeugenden Magnetfeld, wodurch die Moleküle der Luft in kleinere Moleküle aufgespalten werden sollen und danach in den Tank geleitet werden. Die trägeren Moleküle der sich im Tank befindlichen Flüssigkeit, zum Beispiel Benzin/Wassergemisch, treffen auf die energie-reicheren Moleküle der Luft und der Verdampfungsprozess setzt ein.

Die US 5 794 601 A offenbart eine Vorrichtung zur Aufbereitung von alternativen Kraftstoff, um ihn zum Betreiben einer Kraftstoffverbrennungseinrichtung, beispielsweise einer Brennkraftmaschine, verwenden zu können. In einer Verdampfungskammer, die mit dem alternativen Kraftstoff gefüllt ist, wird Abgas der Kraftstoffverbrennungseinrichtung eingeleitet und durch die thermische Energie des Abgases verdampft.

Aufgabe der Erfindung ist es, bei einer Brennkraftmaschine auf möglichst einfache Weise eine weitere Reduktion der Emissionen und des Kraftstoffverbrauches zu ermöglichen.

Ausgehend von einer Brennkraftmaschine der eingangs genannten Art wird diese Aufgabe erfindungsgemäß dadurch gelöst, dass die Abgasrückführleitung über einen sich in Strömungsrichtung verjüngenden Einlauftrichter und eine Düse in die Mischkammer einmündet, wobei die Abgasrückführleitung tangential in den Einlauftrichter mündet und wobei der Austritt der Düse unterhalb einer definierten Füllhöhe für das flüssige Dispersionsmedium in der Mischkammer angeordnet ist.

Das rückgeführte Abgas wird in das in der Mischkammer enthaltene flüssige Dispersionsmedium unterhalb dessen Füllhöhe eingedüst. Dies ermöglicht es, auf einfache und platzsparende Weise eine Dispersion aus Wasser und Abgas bzw. einer Kraftstoff-in-Wasser-Emulsion als Dispersionsmedium und einer durch das Abgas gebildeten dispersen Phase zu erzeugen.

Eine Dispersion ist ein heterogenes Gemisch aus mindestens zwei Stoffen, die sich nicht oder kaum ineinander lösen oder chemisch miteinander verbinden. Dabei sind ein oder mehrere Stoffe fein verteilt in einem kontinuierlichen Stoff, welcher hier als Dispersionsmedium bezeichnet wird.

Eine vollständige Verbrennung des Kraftstoffes kann erreicht werden, wenn stromabwärts der Mischkammer eine Luftleitung in den Einlasstrakt einmündet. Um verschiedene Betriebspunkte der Brennkraftmaschine einstellen zu können ist es dabei vorteilhaft, wenn im Einlasstrakt zwischen der Mischkammer und dem Wärmetauscher ein Steuerventil zur Zudosierung von Luft angeordnet ist.

Dadurch, dass dem gasförmigen Dispersionsmedium zwischen dem Austritt aus der Mischkammer und dem Eintreten in den Wärmetauscher, vorzugsweise über ein Steuerventil, Luft zu dosiert wird, wird ein emissionsarm und gleichförmiger Lauf der Brennkraftmaschine ermöglicht.

Der rückgeführte Teil des Abgases zweigt stromabwärts des abgasseitigen Bereichs des Wärmetauschers vom gesamten Abgasmassenstrom ab und wird der Mischkammer zugeführt, wobei der restliche Teil des gesamten Abgasmassenstroms einem ins Freie führenden Auspuffstrang zugeführt wird. Vorzugsweise wird dabei der Wärmetauscher vom gesamten Abgasmassenstrom durchströmt.

Das flüssige Dispersionsmedium in der Mischkammer enthält beispielsweise mindestens 70 Vol.-%, vorzugsweise mindestens 90 Vol.-% Wasser. Der restliche Anteil des flüssigen Dispersionsmediums kann Kraftstoff, insbesondere ein Otto-Kraftstoff sein. Nach Vergasen der Dispersion aus Kraftstoff, Wasser und Abgas in der Mischkammer wird das Gasgemisch im Wärmetauscher erhitzt und als zündfähiges Gemisch dem Brennraum bzw. den Brennräumen der Brennkraftmaschine zugeführt.

Das Verfahren eignet sich aber nicht nur für mit Otto-Kraftstoff betriebene Brennkraftmaschinen, sondern auch für Diesel-Brennkraftmaschinen. Bei letzterem enthält die Dispersion nur Wasser und Abgas - der Diesel-Kraftstoff kann direkt in den Brennraum bzw. die Brennräume eingespritzt werden.

Prinzipiell kann die Brennkraftmaschine mit dem erfindungsgemäßen Verfahren dynamisch bzw. transient betrieben werden. Ein besonders niedriger Kraftstoffverbrauch und Emissionen lassen sich allerdings erzielen, wenn die Brennkraftmaschine in zumindest einem stationären Betriebspunkt betrieben wird. Dies ermöglicht einen optimalen Wirkungsgrad.

Eine bevorzugte Ausführungsvariante der Erfindung sieht vor, dass die Wand des Einlauftrichters und/oder die Düse stromaufwärts ihres Düsenaustrittes hyperbolisch geformt ist.

In einer besonders platzsparenden und einfachen Ausführung der Erfindung ist vorgesehen, dass der Abgaswärmetauscher als Doppelrohrwärmetauscher mit einem Innenrohr und einem konzentrisch zum Innenrohr angeordneten Außenrohr ausgebildet ist, wobei das Innenrohr mit dem Einlasstrakt und das Außenrohr mit dem Auslasstrakt strömungsverbunden ist.

Durch die Abgasrückführleitung werden Abgase aus dem Auslasstrakt angesaugt und strömen über den Einlauftrichter und die hyperbolisch geformte Düse unterhalb des Flüssigkeitsniveaus des flüssigen Dispersionsmedium in die Mischkammer. Durch den Einlauftrichter und die Düse werden die Abgase stark beschleunigt, wodurch der Druck im Bereich der Düsenöffnung unter den Dampfdruck des Dispersionsmediums (z.B. Wasser: 23,4 mbar bei 20°C) sinkt. Dadurch geht das Dispersionsmedium zumindest im Bereich der Düsenöffnung spontan in den gasförmigen Zustand über. Durch den hyperbolisch geformten Einlauftrichter können die Verluste während des Beschleunigungsvorganges minimiert werden.

Das aus der Düse austretende rückgeführte Abgas bringt das flüssige Dispersionsmedium aufgrund des reduzierten Drucks zum Sieden und Verdampfen und nimmt dabei Wasser und Kraftstoff aus dem Dispersionsmedium auf. Es bildet sich ein Gasgemisch aus Abgas, Wasserdampf und Kraftstoffdampf.

Nach dem Austreten des Gasgemisches aus der Mischkammer wird Frischluft über das Steuerventil zu dosiert, wobei das Steuerventil so weit geöffnet wird, dass eine Verbrennung im Brennraum der Brennkraftmaschine für den gewünschten Betriebspunkt stattfinden kann. Nach dem Zudosieren der Frischluft gelangt das Gasgemisch in den beispielsweise als Doppelrohrwärmetauscher ausgebildeten Wärmetauscher. Im Wärmetauscher nimmt das Gasgemisch thermische Energie aus dem Abgas auf. Nach dem Austritt aus dem Wärmetauscher wird das Gasgemisch in den Brennraum oder die Brennräume der Brennkraftmaschine geführt, wo es verbrennt.

Dier Erfindung wird im Folgenden anhand des in den Figuren dargestellten nicht einschränkenden Ausführungsbeispiels näher erläutert. Darin zeigen schematisch:
- Fig. 1: eine erfindungsgemäße Brennkraftmaschine; und
- Fig. 2: einen Einlauftrichter der Brennkraftmaschine in einer Draufsicht gemäß dem Pfeil II.

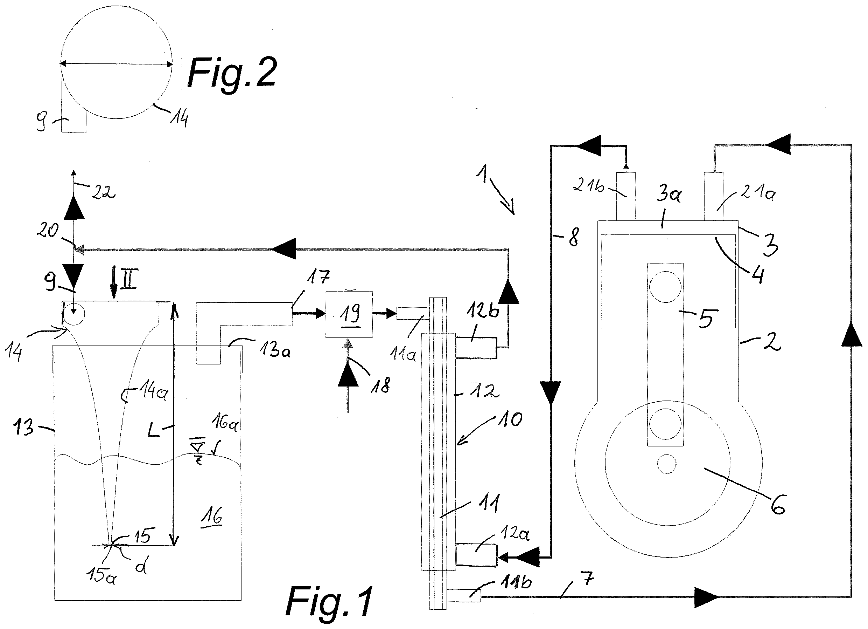

Die in Fig. 1 dargestellte Brennkraftmaschine 1 weist ein Motorgehäuse 2 mit zumindest einem Zylinder 3 auf, in welchem ein an einen Brennraum 3a grenzender hin- und hergehender Kolben 4 angeordnet ist. Der Kolben 4 ist über eine Pleuelstange 5 mit einer Kurbelwelle 6 antriebsverbunden.

Die Brennkraftmaschine 1 weist weiters einen Einlasstrakt 7, einen Auslasstrakt 8 und eine den Auslasstrakt 8 und den Einlasstrakt 7 verbindende Abgasrückführleitung 9 auf. Mit Bezugszeichen 10 ist ein Wärmetauscher bezeichnet, welcher den Einlasstrakt 7 und den Auslasstrakt 8 miteinander thermisch verbindet.

Der Wärmetauscher 10 ist im Ausführungsbeispiel als Gegenstrom-Wärmetauscher ausgebildet und weist ein Innenrohr 11 und ein dieses konzentrisch umgebendes Außenrohr 12 auf, wobei der Eintritt 11a und der Austritt 11b des Innenrohres 11 mit dem im Einlasstrakt 7 und der Eintritt 11a und der Austritt 11b des Außenrohres 12 mit dem Auslasstrakt 8 strömungsverbunden ist. Dabei sind die Eintritte 11a, 12a des Innenrohres 11 und des Außenrohres 12 einerseits, sowie die Austritte 11b, 12b des Innenrohres 11 und des Außenrohres 12 andererseits an unterschiedlichen Enden des Wärmetauschers 10 angeordnet.

Im Einlasstrakt 7 ist eine Mischkammer 13 angeordnet, welche ein flüssiges Dispersionsmedium 16, beispielsweise ein Gemisch aus Kraftstoff und Wasser, beinhaltet. Die Abgasrückführleitung 9 mündet tangential in einen Einlauftrichter 14 der Mischkammer 13 ein. Der Einlauftrichter 14 verjüngt sich stetig nach unten und endet in einer in Bezug auf den Einlauftrichter 14 zentrisch bzw. axial angeordneten Düse 15, wobei die Wände 14a des Einlauftrichters 14 bzw. der Düse 15 stromaufwärts des Düsenaustritts 15a eine zumindest annähernd hyperbolische Form aufweisen. Der Durchmesser d des beispielsweise kreisrunden Düsenaustrittes 15a ist wesentlich geringer als die Höhe H des Einlauftrichters 14. Anders ausgedrückt beträgt die Höhe H des Einlauftrichters 14 mindestens das 100-fache des Durchmessers d des Düsenaustrittes 15a. Die Düse 15 befindet sich unterhalb des Flüssigkeitsspiegels (Füllhöhe) 16a des flüssigen Dispersionsmediums 16. Vom oberen Bereich 13a der Mischkammer 13 geht eine zum Wärmetauscher 10 führende Leitung 17 des Einlasstraktes 7 aus, wobei zwischen der Mischkammer 13 und dem Wärmetauscher 10 in den Einlasstrakt 7 in die Leitung 17 eine Luftleitung 18 einmündet, deren Luftmenge durch ein Steuerventil 19 gesteuert werden kann.

Die aus dem Brennraum 3a ausgestoßenen Abgase gelangen über Auslassventile 21b in den im Auslasstrakt 8 angeordneten abgasseitigen Bereich des Wärmetauschers 10, welcher durch das Außenrohr 12 gebildet ist, und durchströmen dieses. Nach Eintritt der Abgase in den Wärmetauscher 10 wird die enthaltene Abgaswärmeenergie auf das Gasgemisch im Innenrohr 11 des Wärmetauschers 10 übertragen. Im Ausführungsbeispiel haben die Abgase beim Austritt 12a aus dem Außenrohr 12 beispielsweise annähernd Umgebungstemperatur (ca. 310°K bis 330°K).

Die Abgase strömen weiter bis zur Abzweigung 20 der Abgasrückführleitung 9 und werden durch das Druckgefälle zur Mischkammer 13 hin teilweise in die Mischkammer 13 angesaugt. Der nicht in die Mischkammer 13 geleitete Teil der Abgase strömt über den Auspuffstrang 22 ins Freie. Die rückgeführten Abgase strömen tangential in den Einlauftrichter 14 der Mischkammer 13 und werden über den hyperbolisch gekrümmten Einlauftrichter 14 und die Düse 15 in das flüssige Dispersionsmedium 16 unterhalb des Flüssigkeitsspiegels 16a eingedüst. Dabei wird durch den Einlauftrichter 14 und die Düse 15 die Geschwindigkeit der Abgase auf etwa 2.000 m/s erhöht, so dass der Druck der Abgase unter 20mbar sinkt; bei diesem Druck beginnt das Wasser bei Umgebungstemperatur (20°C) zu sieden. Durch den zumindest angenähert hyperbolisch geformten Einlauftrichter 14, dessen Wände beispielsweise die Funktion f(x) = 1/x erfüllen, findet eine "freie Einwirbelung" (Potentialwirbel) der Abgase statt, wodurch Verluste im Beschleunigungsvorgang minimiert werden können.

Das beschleunigte Abgas wird nun in die Mischkammer 13, welche mit einer wässrigen Lösung aus ca. 25% Treibstoff und 75% Wasser gefüllt ist, unterhalb der Füllhöhe 16a (Flüssigkeitsniveau) des flüssigen Dispersionsmediums 16 eingeleitet. Das Abgas bringt die wässrige Lösung, wie bereits erwähnt, aufgrund der reduzierten Drucks zum Sieden und nimmt dabei - ähnlich einer Wasserstrahlpumpe - Wasser und Treibstoff des flüssigen Dispersionsmediums auf, wobei es zu einer Abkühlung auf mindestens 10°C unter Umgebungstemperatur kommt.

Das stromabwärts der Mischkammer 13 angeordnete Steuerventil 19 dient der Frischluftzufuhr und wird so weit geöffnet, dass eine Verbrennung im Brennraum 3a im Einpunkt- oder Mehrpunktbetrieb stattfindet. Nach der Zuführung der Frischluft über die Frischluftleitung 18 wird das Gasgemisch weiter in den Wärmetauscher 10 geleitet.

Im Wärmetauscher 10 nimmt das Gasgemisch thermische Energie aus dem Abgas auf. Nach dem Austritt aus dem Wärmetauscher 10 wird das Gemisch direkt zum Einlassventil 21a und danach weiter in den Brennraum 3a eines Zylinders 3 der Brennkraftmaschine 1 geleitet.

Es erfolgt nun die Kompression des Gasgemisches und anschließend die exotherme Verbrennung des Gasgemisches im Zylinder 3 bei ca. 2.300 °K.

Das erfindungsgemäße Verfahren kann sowohl auf Otto-Kreisprozesse, als auch auf Diesel-Kreisprozesse angewendet werden. Es weist im Vergleich zum bekannten Stand der Technik folgende Vorteile auf:
- Hoher thermischer Wirkungsgrad;
- Besonders geringe Emissionen;
- Geringer Kostenaufwand;
- Geringes erforderliches Bauvolumen, daher nachrüstbar: sowohl die Mischkammer 13, als auch der Wärmetauscher 10 lassen sich in herkömmliche Brennkraftmaschinen 1 problemlos integrieren;
- Hohes Einsparungspotential an Kraftstoff;
- Geringer Kühlbedarf der Brennkraftmaschine 1;
- verbesserter Verbrennungsablauf, geringes Verschmutzen und Verrußen z.B. der Zündkerzen;
- durch vollständige Kraftstoff-in-Wasser-Emulsion erfolgt kein Wassereintrag in das Schmieröl.

## Patentansprüche

1. Brennkraftmaschine (1), welche mit einem flüssigen oder gasförmigen Kraftstoff betreibbar ist, mit zumindest einem Einlasstrakt (7), zumindest einem Auslasstrakt (8) und einer den Auslasstrakt (8) und den Einlasstrakt (7) verbindenden Abgasrückführleitung (9) zur Rückführung zumindest eines Teils des bei der Verbrennung des Kraftstoffes entstehenden Abgases in den Einlasstrakt (7), mit einer im Einlasstrakt (7) angeordneten Mischkammer (13) zur Bildung einer Dispersion aus rückgeführtem Abgas und einem Wasser und Kraftstoff enthaltenden flüssigen Dispersionsmedium (16), wobei die vom Auslasstrakt (8) abzweigende Abgasrückführleitung (9) in die Mischkammer (13) einmündet, und wobei stromabwärts der Mischkammer (13) der Einlasstrakt (7) über einen Wärmetauscher (10) mit dem Auslasstrakt (8) thermisch verbunden ist, welcher Wärmetauscher (10) vorzugsweise als Gegenstromwärmetauscher ausgebildet ist, wobei das gasförmige Dispersionsmedium im Wärmetauscher (10) thermische Energie aus dem Abgas aufnimmt, **dadurch gekennzeichnet, dass** die Abgasrückführleitung (9) über einen sich in Strömungsrichtung verjüngenden Einlauftrichter (14) und eine Düse (15) in die Mischkammer (13) einmündet, wobei die Abgasrückführleitung (9) tangential in den Einlauftrichter (14) einmündet und wobei der Austritt der Düse (15) unterhalb einer definierten Füllhöhe (16a) für das flüssige Dispersionsmedium (16) in der Mischkammer (13) angeordnet ist.

2. Brennkraftmaschine (1) nach Anspruch 1, **dadurch gekennzeichnet, dass** in den Einlasstrakt (7) stromabwärts der Mischkammer (13) eine Luftleitung (18) über ein Steuerventil (19) zur Zudosierung von Luft einmündet, wobei vorzugsweise das Steuerventil (19) im Bereich der Einmündung der Luftleitung (18) in den Einlasstrakt (7) angeordnet ist.

3. Brennkraftmaschine (1) nach einem der Ansprüche 1 oder 2,**dadurch gekennzeichnet, dass** der Einlauftrichter (14) und/oder der Düse (15) stromaufwärts des Düsenaustrittes (15a) hyperbolisch geformt ist.

4. Brennkraftmaschine (1) nach einem der Ansprüche 1 bis 3, **dadurch gekennzeichnet, dass** der Wärmetauscher (10) als Doppelrohrwärmetauscher mit einem Innenrohr (11) und einem konzentrisch zum Innenrohr (11) angeordneten Außenrohr (12) ausgebildet ist, wobei das Innenrohr (11) mit dem Einlasstrakt (7) und das Außenrohr (12) mit dem Auslasstrakt (8) strömungsverbunden ist.

## Claims

1. Internal combustion engine (1) which can be operated with a liquid or gaseous fuel, having at least one intake tract (7), at least one exhaust tract (8) and an exhaust gas recirculation line (9) connecting the exhaust tract (8) and the intake tract (7) for recirculating at least part of the exhaust gas produced during the combustion of the fuel into the intake tract (7), having a mixing chamber (13) arranged in the intake tract (7) for forming a dispersion of recirculated exhaust gas and a liquid dispersion medium (16) containing water and fuel, wherein the exhaust gas recirculation line (9) branching off from the exhaust tract (8) opens into the mixing chamber (13), and wherein downstream of the mixing chamber (13) the intake tract (7) is thermally connected to the exhaust tract (8) via a heat exchanger (10), which heat exchanger (10) is preferably designed as a countercurrent heat exchanger, wherein the gaseous dispersion medium in the heat exchanger (10) absorbs thermal energy from the exhaust gas, **characterised in that** the exhaust gas recirculation line (9) opens into the mixing chamber (13) via an inlet funnel (14) tapering in the flow direction and a nozzle (15), wherein the exhaust gas recirculation line (9) opens tangentially into the inlet funnel (14) and wherein the outlet of the nozzle (15) is arranged below a defined filling level (16a) for the liquid dispersion medium (16) in the mixing chamber (13).

2. Internal combustion engine (1) according to claim 1, **characterised in that** an air duct (18) opens into the intake tract (7) downstream of the mixing chamber (13) via a control valve (19) for metering in air, wherein preferably the control valve (19) is arranged in the region of the opening of the air duct (18) into the intake tract (7).

3. Internal combustion engine (1) according to one of claims 1 or 2, **characterised in that** the inlet funnel (14) and/or the nozzle (15) is hyperbolically shaped upstream of the nozzle outlet (15a).

4. Internal combustion engine (1) according to one of the claims 1 to 3, **characterised in that** the heat exchanger (10) is designed as a doubletube heat exchanger with an inner tube (11) and an outer tube (12) arranged concentrically relative to the inner tube (11), wherein the inner tube (11) is flow-connected to the intake tract (7) and the outer tube (12) is flow-connected to the exhaust tract (8).

## Revendications

1. Moteur à combustion interne (1) pouvant être actionné par un carburant liquide ou gazeux comprenant au moins une ligne d'admission (7), au moins une ligne d'échappement (8) et une conduite de recirculation des gaz d'échappement (9) reliée à la ligne d'échappement (8) et à la ligne d'admission (7), permettant de recycler au moins une partie des gaz d'échappement produits lors de la combustion du carburant dans la ligne d'admission (7), ainsi qu'une chambre de mélange (13) installée dans la ligne d'admission (7) permettant de former une dispersion des gaz d'échappement recyclés et d'un agent de dispersion liquide (16) renfermant de l'eau et du carburant, la conduite de recirculation des gaz d'échappement (8) se ramifiant sur la ligne d'échappement (9) débouchant dans la chambre de mélange (13), et, en aval de la chambre de mélange (13), la ligne d'admission (7) étant reliée thermiquement à la ligne d'échappement (8), par l'intermédiaire d'un échangeur de chaleur (10) cet échangeur de chaleur (10) étant de préférence réalisé sous la forme d'un échangeur de chaleur à contre-courant, l'agent de dispersion gazeux recevant dans l'échangeur de chaleur (10) de l'énergie thermique provenant des gaz d'échappement,
**caractérisé en ce que**
la conduite de recirculation des gaz d'échappement (9) débouche dans la chambre de mélange (13) par l'intermédiaire d'un embout entonnoir d'entrée se rétrécissant dans la direction de circulation (14) et d'une buse (15), la conduite de recirculation des gaz d'échappement (9) débouchant tangentiellement dans l'embout-entonnoir d'entrée (14), et la sortie de la buse (15) étant située au-dessous d'une hauteur de remplissage définie (16a) de l'agent de dispersion liquide (16) dans la chambre de mélange (13).

2. Moteur à combustion interne (1) conforme à la revendication 1,
**caractérisé en ce que**
dans la ligne d'admission (7), en aval de la chambre de mélange (13), débouche par l'intermédiaire d'une soupape de commande (19) une conduite d'air (18) permettant une addition dosée d'air, et de préférence la soupape de commande (19) est installée dans la zone de l'embouchure de la conduite d'air (18) dans la ligne d'admission (7).

3. Moteur à combustion interne (1) conforme à l'une des revendications 1 et 2,
**caractérisé en ce que**
l'embout entonnoir d'entrée (14) et/ou la buse (15) a/ont une forme hyperbolique en amont de la sortie de la buse (15a).

4. Moteur à combustion interne (1) conforme à l'une des revendications 1 à 3,
**caractérisé en ce que**
l'échangeur de chaleur (10) est réalisé sous la forme d'un échangeur de chaleur à double tubes comportant un tube interne (11) et un tube externe (12) concentrique au tube interne, le tube interne (11) étant relié fluidiquement à la ligne d'admission (7) et le tube externe (12) étant relié fluidiquement à la ligne d'échappement (8).
